**Europäisches Patentamt**

**European Patent Office**

**Office européen des brevets**

(11) Publication number: **0 162 312**

**B1**

# EUROPEAN PATENT SPECIFICATION

(45) Date of publication of patent specification: **15.06.88**

(51) Int. Cl.⁴: **B 64 C 13/28**

(21) Application number: **85104892.6**

(22) Date of filing: **22.04.85**

(54) An aircraft wing structure and a mechanism therefor.

(30) Priority: **25.05.84 US 614252**

(43) Date of publication of application:
**27.11.85 Bulletin 85/48**

(45) Publication of the grant of the patent:
**15.06.88 Bulletin 88/24**

(84) Designated Contracting States:
**BE CH DE FR GB IT LI NL SE**

(56) References cited:
**GB-A-2 126 177**
**US-A-3 036 472**
**US-A-3 036 473**
**US-A-3 655 149**

(73) Proprietor: **Western Gear Corporation**
**P.O. Box 182**
**Lynwood California 90262 (US)**

(72) Inventor: **Mourani, George D.**
**16401 Gentry Lane**
**Huntington Beach California 92647 (US)**

(74) Representative: **Howden, Christopher Andrew et al**
**FORRESTER & BOEHMERT Widenmayerstrasse 4/I**
**D-8000 München 22 (DE)**

Courier Press, Leamington Spa, England.

## Description

The present invention relates to an apparatus for positioning a movable wing section in accordance with the features of the preamble of claim 1, as known e.g. from US—A—3655149.

Aircraft wing structures having sections which are movable pivotably for control purposes are well known. Movable flaps on the leading edges of wings have been found to be particularly useful, for example in providing a braking force during landing and to cause an abrupt upward movement of an aircraft, which is especially useful for evasive millitary manoeuvers.

However, the motors for driving such flaps cannot be mounted in the wings themselves because of size and weight considerations. The flaps are therefore driven, in conventional arrangements, by a torque shaft that extends outwardly through the centre of the wing structure from a motor mounted at the fuselage. So that this shaft can be of the lightest construction possible, the shaft is driven at a relatively high rotational speed, which speed is reduced by an actuator mounted in the wing that includes a reduction gear set, usually of the planetary type. Exemplary rotary actuators are shown in US—A—3,640,150, US—A—3,008,355 and US—A—2,966,808.

Although such actuators are made as compact as possible and provide a suitable ratio of input speed to output speed, they are nevertheless of substantial size when compared to the vertical dimension of an aircraft wing, particularly in the case of modern thin wing military fighter aircraft.

In recent years, wing thicknesses have decreased considerably, and have reached the point at which it is impossible to accommodate a rotary actuator of sufficient force transmitting capacity without creating a bulge on the wing profile. However, any such disruption of the wing profile is highly undesirable for aerodynamic reasons.

One partial solution of this problem has been the use of a series of smaller and smaller rotary actuators progressing towards the wing tip. As the size of the actuators decreases, their capacity falls off rapidly and larger numbers of acutators are required. This concept has its limits, however, and a point is reached at which actuators of a useful size cannot be accommodated within the wing. Moreover, there is a very significant increase in cost as the size of the individual actuators is decreased and their number is increased.

The outermost portion of a movable wing flap, that is the portion nearest the wing tip, often is supported by the inner portion of that flap since it cannot be attached to the actuator. It may therefore be deflected by the air pressure through a disproportionate angle. This deflection may be more pronounced in the home position or in the activated position. The result is a loss of the aerodynamic efficiency of the flap and a reduction in the preciseness of the control of the aircraft that is achievable.

It is an object of the present invention to provide an arrangement for driving movable wing sections that can be accommodated within a relatively thin wing profile without disrupting the airflow over the wing to a greater extent than necessary.

A mechanism of the present invention has been found to permit precise control of a movable wing section, particularly at the thinnest portion of the wing, without increasing the number of actuators or increasing the cost of the driving mechanism.

Accordingly, the present invention provides apparatus for positioning a movable wing section that extends along and is pivotable with respect to a main wing structure that extends from an aircraft fuselage, to a wing tip, said apparatus including motor means for producing rotary movement, a torque shaft extending outwardly along said main wing section to the wing tip and connected to said motor means to be rotated thereby, and rotary actuator means connected to said torque shaft, said apparatus being characterized by the inclusion of a return shaft coaxial with and surrounding said torque shaft and operatively connected to said rotary actuator means to be rotated thereby at a reduced speed, said return shaft extending inwardly from the, or the outermost rotary actuator means toward said fuselage and connected to said movable wing section thereby to transmit rotary forces from said actuator to said movable wing section and to pivot said movable wing section in a hinge-like manner.

Preferably the return shaft may be connected to said movable wing section at a plurality of spaced-apart locations and advantageously the rotary actuator means may include a reduction gear set. Conveniently said reduction gear set may be of the planetary type.

Furthermore said rotary actuator means may be located adjacent to a store at a wing tip of said main wing section and these rotary actuator means may be enclosed by an enlarged aerodynamic profile of said main wing section.

Conveniently at least one inboard rotary actuator, operatively connected to said torque shaft and to said movable wing section, may be included. This inboard rotary actuator may be of simple slice construction.

According to another aspect of this invention there is provided an aircraft wing-structure that is adapted to extend from an aircraft fuselage comprising a main wing structure and a movable wing section pivotally connected to the main wing structure and including the aforesaid apparatus.

In order that the invention may be more readily understood, and so that further features thereof may be appreciated, an embodiment of the invention will now be described, by way of example, with reference to the accompanying drawings, in which:

Figure 1 is a perspective view of a wing structure constructed in accordance with the present invention, the leading edge flap being shown only in phantom lines to expose the internal mechanism;

Figure 2 is a partially broken away fragmentary plan view of the wing structure of Figure 1;

Figure 3 is a partially broken away front view of the wing structure taken as indicated by the line 3—3 in Figure 2;

Figure 4 is a diagrammatic perspective view of a leading edge flap and associated structure of a previously known construction, the flap being shown in its home position in phantom lines and in an activated position in solid lines; and

Figure 5 is a diagrammatic view, similar to Figure 4, of the leading edge flap and associated structure of the present invention.

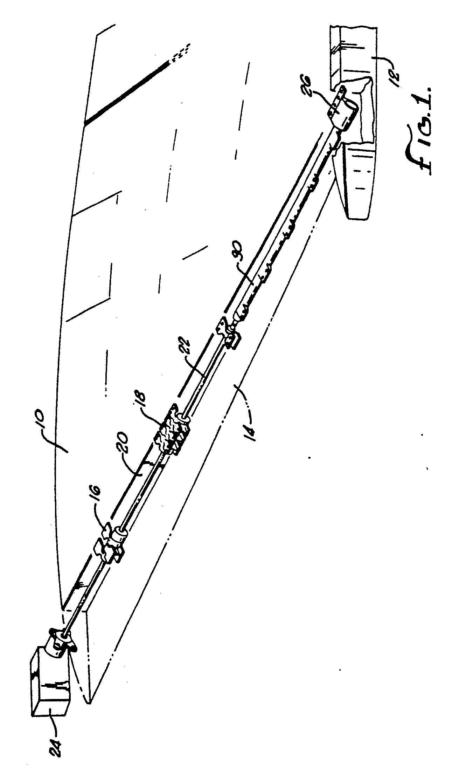

An aircraft wing structure of the present invention, as shown in Figures 1 to 3 of the accompanying drawings, comprises a main wing section 10 that extends outwardly from a fuselage (not shown) to a wing tip store 12. The store 12, which may be, for example, an auxilliary fuel tank or an armament, has a substantially greater vertical dimension than the wing itself.

As in the case of many high speed aircraft, such as fighter aircraft, the wing profile is as thin as is structurally possible for aerodynamic reasons. Improvements in air-frame technology have permitted the wing minimum thickness to be reduced substantially without sacrificing the required structural strength and rigidity. The wing profile of a wing structure of the invention, from the fuselage to the store 12, is smooth and free of disruptive aerodynamic effects, but the store, or the outboard wing tip in the absence of a store, has a unavoidable adverse aerodynamic effect that must be accepted.

Extending along the leading edge of the main wing section 10 is a pivotably movable wing section in the form of a leading edge flap 14. This flap 14 has a home position in which it is aligned with the main wing section 10 and can be moved downward in a hinge-like manner into an activated position. It is also usually possible to move the flap 14 upwardly through a smaller angle.

The flap 14 is supported by the main wing section 10 and, in the illustrated exemplary arrangement, its relative position is controlled by a conventional inboard single slice rotary actuator 16 and multi-slice rotary actuators 18. Each actuator 16 and 18 is contained within the wing profile, being mounted on an internal wing spar 20 partially enclosed within the main wing section 10 and extending longitudinally along the flap 14.

The single slice inboard actuator 16 is located in a thicker portion of the wing profile, and can thus be larger and heavier than the further outboard multi-slice actuator 18. The multi-slice actuator 18, which is smaller vertically to fit within the thinner confines of the wing profile is located towards the longitudinal centre of the wing. It is therefore necessary to use a multi-slice construction, which in essence includes a group of the smaller actuators, to generate sufficient driving force. In accordance with the design specifications of a particular aircraft there may be, and usually are, a series of additional groupings of progressively smaller inboard rotary actuators 16 and 18. In some aircraft there are a series of leading edge flaps arranged along the main wing section, each with its own actuators.

Each inboard actuator 16 or 18 includes at least one set of planetary speed reduction gears and is arranged to be driven by a torque shaft 22 that extends longitudinally through the wing from a motor 24 mounted on the fuselage. The actuators 16 and 18 drive the flap 14 at a reduced speed but increased torque.

The thinnest portion of the wing, nearest the store 12, cannot accommodate a rotary actuator that is large enough to be effective if the smooth wing profile of a high performance thin wing aircraft is to be maintained.

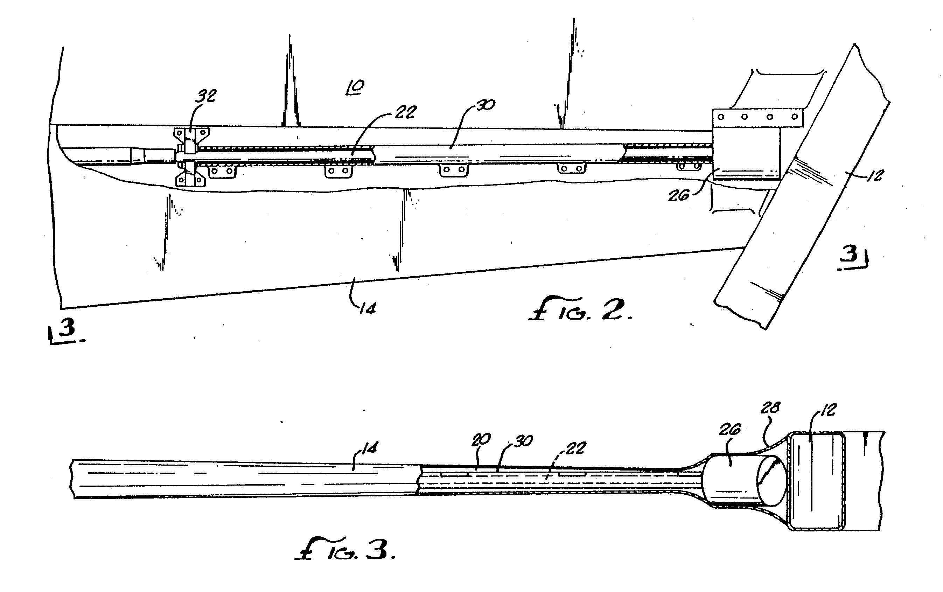

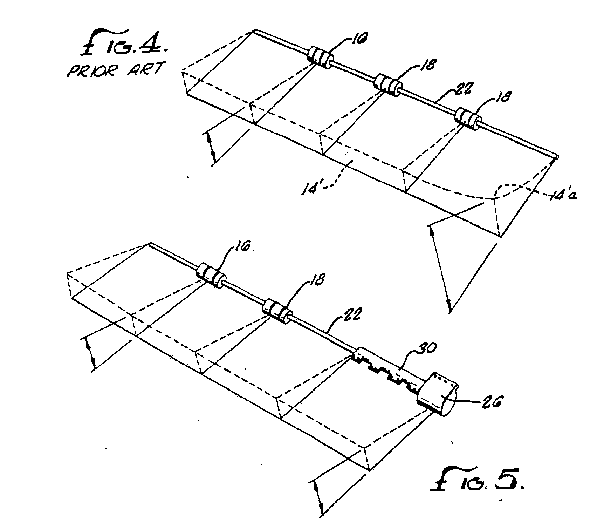

It is possible to omit actuators in the thinnest part of the wing, in which case the outermost portion of the leading edge flap 14 is supported only by the inner portion, as in the case of the known flap arrangement 14' shown in Figure 4. If the flap 14' were sufficiently rigid, it would not be deflected substantially by the air pressure or at least the deflection would be uniform throughout its length. However, the limited torsional rigidity of the flap 14' is typically such that in previously known arrangements of this type the outermost corner 14'a of the flap may be deformed upwardly under load when, for example, the flap is raised to its home position, as illustrated in phantom lines in Figure 4. The result is that the effectiveness of the flap is diminished and precise control of the aircraft is made more difficult because the deformation may be greater in one position than another as the load varies, as indicated by the arrows in the Figure 4.

In order substantially to obviate this problem a relatively large single slice outboard rotary actuator 26, of the planetary gear type, is mounted at the wing tip adjacent the store 12 and connected to the outer end of the torque shaft 22. Although, as shown best in Figure 3, an enlargement 28 of the wing profile is required to accommodate this outboard actuator 26, the adverse aerodynamic effect is minimized because the enlargement is directly adjacent to the store 12 where disruption of the airflow must occur, even in the absence of the actuator. Generally, the wing tip actuator 26 can be made large enough that a single slice construction is sufficient at this location.

The torque shaft 22 is concentric with and surrounded by a larger return shaft 30, both shafts being hollow. The return shaft is driven by the wing tip actuator 26 at a reduced rotational speed, just as the flap 14 is driven at a reduced speed by the inboard actuators 16 and 18.

The return shaft 30 extends inwardly towards the fuselage, almost reaching the nearest of the inboard actuators 18. At its inner end it is supported and positioned by a bracket 32 (Figure 2) that is attached to the main wing section 10 and the flap 14. Since the rotary driving forces are thus applied along the entire length of the outer section of the flap 14, a high degree of torsional rigidity of the flap is not required for precise control. As illustrated in Figure 5, any deflection of the flap 14 is substantially uniform throughout its length in both the home position (shown in phantom lines) and the activated or lowered position.

It will be appreciated from the above description that the present invention permits precise control of a movable wing section that extends fully to the wing tip without unacceptable adverse aerodynamic effects. It also reduces the cost and complexity of the wing flap mechanism.

**Claims**

1. Apparatus for positioning a movable wing section (14) that extends along and is pivotable with respect to a main wing structure (10) that extends from an aircraft fuselage to a wing tip said apparatus including motor means (24) for producing rotary movement, a torque shaft (22) extending outwardly along said main wing section to the wing tip and connected to said motor means to be rotated thereby, and rotary actuator means (26) connected to said torque shaft, said apparatus being characterized by the inclusion of a return shaft (30) coaxial with and surrounding said torque shaft and operatively connected to said rotary actuator means to be rotated thereby at a reduced speed, said return shaft extending inwardly from the, or the outermost rotary actuator means toward said fuselage and connected to said movable wing section thereby to transmit rotary forces from said actuator to said movable wing section and to pivot said movable wing section in a hinge-like manner.

2. The apparatus of claim 1 wherein said return shaft (30) is connected to said movable wing section (14) at a plurality of spaced-apart locations.

3. The apparatus of claim 1 or 2, wherein said rotary actuator means (26) includes a reduction gear set.

4. The apparatus of claim 3 wherein said reduction gear set is of the planetary type.

5. The apparatus of claim 1 wherein said rotary actuator means (26) is located adjacent to a store (12) at a wing tip of said main wing section (10).

6. The apparatus of claim 1 wherein said rotary actuator means (26) is enclosed by an enlarged aerodynamic profile (28) of said main wing section (10).

7. The apparatus of claims 1 or 2, wherein said rotary actuator means (26) is enclosed by an enlarged aerodynamic profile (28) of said main wing section (10) adjacent to a store (12) at a wing tip of said main wing section.

8. The apparatus of claims 1, 2 or 7 further including at least one inboard rotary actuator (16) operatively connected to said torque shaft (22) and said movable wing section (14).

9. The apparatus of claim 8 wherein said inboard rotary actuator (16) is of single slice construction.

10. An aircraft wing structure that is adapted to extend from an aircraft fuselage comprising a main wing structure and a movable wing section pivotally connected to the main wing structure and including apparatus in accordance with any one of claims 1 to 9.

**Patentansprüche**

1. Vorrichtung zum Verstellen eines beweglichen Flügelabschnitts (14), der sich längs zu einem sich von dem Rumpf eines Flugzeugs zu einer Flügelspitze erstreckenden Hauptflügelkörpers erstreckt und relativ zu diesem verschwenkbar ist mit einer Motoreinrichtung (24) zur Erzeugung einer Drehbewegung, einer sich entlang des Hauptflügelabschnitts zu der Flügelspitze erstreckenden und mit der Motoreinrichtung zur Drehung durch diese verbundenen Drehwelle (22) und mit der Drehwelle verbundene Drehbetätigungseinrichtungen (26), gekennzeichnet durch die Vorsehung von mit der Drehwelle koaxialen und diese umfassenden und mit der Drehbetätigungseinrichtung zur Drehung mit einer reduzierten Geschwindigkeit wirkungsmäßig verbundene Rückwelle (30), die sich nach innen von der, oder der äußersten der, Drehbetätigungseinrichtung(en), in Richtung auf den Rumpf erstreckt und mit dem beweglichen Flügelabschnitt zur Übertragung einer Drehkraft von der Betätigungseinrichtung zu dem beweglichen Flügelabschnitt und zur scharnierartigen Anlenkung des beweglichen Flügelabschnitts verbunden ist.

2. Vorrichtung nach Anspruch 1, wobei die Rückwellen (30) mit dem beweglichen Flügelabschnitt (11) an einer Mehrzahl von voneinander beabstandeten Orten verbunden ist.

3. Vorrichtung nach Anspruch 1 und Anspruch 2, dadurch gekennzeichnet, daß die Drehbetätigungseinrichtung (26) ein Untersetzungsgetriebe aufweist.

4. Vorrichtung nach Anspruch 3, dadurch gekennzeichnet, daß das Untersetzungsgetriebe ein Planetengetriebe ist.

5. Vorrichtung nach Anspruch 1, wobei die Drehbetätigungseinrichtung (26) benachbart einem Behälter (12) an einer Flügelspitze des Hauptflügelabschnitts (10) angeordnet ist.

6. Vorrichtung nach Anspruch 1, wobei die Drehbetätigungseinrichtung (26) von einem größeren aerodynamischen Profil (28) des Hauptflügelabschnitts (10) aufgenommen wird.

7. Vorrichtung nach Anspruch 1 oder Anspruch 2, wobei die Drehbetätigungseinrichtung (26) von einem größeren aerodynamischen Profil (28) des Hauptflügelkörpers (10) benachbart einem Behältnis (12) an der Flügelspitze des Hauptflügelabschnitts aufgenommen wird.

8. Vorrichtung nach Anspruch 1, 2 oder 7, weiter mit wenigstens einem inneren Drehbetätiger (16), der wirkungsmäßig mit der Drehwelle (22) und dem beweglichen Flügelabschnitt (14) verbunden ist.

9. Vorrichtung nach Anspruch 1, wobei der innere Drehbetätiger (16) aus lediglich einer Scheibe besteht.

10. Aufbau eines Flugzeugflügels, der zur Erstreckung von dem Rumpf eines Flugzeugs eingerichtet ist, mit einem Hauptflügelkörper und einem beweglichen Flügelabschnitt, der mit dem Hauptflügelkörper verschwenkbar verbunden ist und eine Vorrichtung nach einem der Ansprüche 1 bis 9 aufweist.

**Revendications**

1. Appareil destiné à positionner une section d'aile mobile (14) qui s'étend le long de et peut être mise en pivotement par rapport à une structure d'aile principale (10) qui s'étend depuis un fuselage d'avion jusqu'à un bout d'aile, l'appareil comprenant un moteur (24) pour produire un mouvement rotatif, un arbre de torsion (22) s'étendant vers l'extérieur le long de la section d'aile principale jusqu'au bout d'aile et relié au moteur pour sa mise en rotation par celui-ci, et un mécanisme d'actionnement rotatif (26) raccordé à l'arbre de torsion, caractérisé par l'incorporation d'un arbre de retour (30) coaxial avec et entourant l'arbre de torsion et relié opérationnellement au mécanisme d'actionnement rotatif pour être mis en rotation par celui-ci à une vitesse réduite, l'arbre de retour s'étendant vers l'intérieur à partir du mécanisme d'actionnement rotatif ou à partir du mécanisme d'actionnement rotatif le plus éloigné en direction du fuselage et relié à la section d'aile mobile pour transmettre les forces rotatives depuis le mécanisme d'actionnement à la section d'aile mobile et pour mettre en pivotement la section d'aile mobile à la manière d'une articulation à charnière.

2. Appareil selon la revendication 1, dans lequel l'arbre de retour (30) est relié à la section d'aile mobile (14) en plusieurs emplacements espacés entre eux.

3. Appareil selon la revendication 1 ou 2, dans lequel le mécanisme d'actionnement rotatif (26) comprend un train d'engrenages de réduction.

4. Appareil selon la revendication 3, dans lequel le train d'engrenage réducteur est du type planétaire.

5. Appareil selon la revendication 1, dans lequel le mécanisme d'actionnement rotatif (26) est situé de façon contiguë à un réservoir (12) sur un bout d'aile de la section d'aile principale (10).

6. Appareil selon la revendication 1, dans lequel le mécanisme d'actionnement rotatif (26) est logé dans le profile aérodynamique agrandi (28) de la section d'aile principale (10).

7. Appareil selon les revendications 1 ou 2, dans lequel le mécanisme d'actionnement rotatif (26) est logé dans un profilé aérodynamique agrandi (28) de la section d'aile principale (10) contiguë à un réservoir (12) sur un bout d'aile de la section d'aile principale.

8. Appareil selon les revendications 1, 2 ou 7 comprenant de plus au moins un mécanisme d'actionnement rotatif intérieur (16) relié opérationnellement à l'arbre de torsion (22) et à la section d'aile mobile (14).

9. Appareil selon la revendication 8, dans lequel le mécanisme d'actionnement rotatif intérieur (16) est de conception monocouche.

10. Structure d'aile d'avion apte à s'étendre depuis un fuselage d'avion comprenant une structure d'aile principale et une section d'aile mobile reliée de façon pivotante à la structure d'aile principale et comprenant un appareil conformément à l'une quelconque des revendications 1 à 9.

FIG.1.

FIG. 2.

FIG. 3.

2

FIG.4.
PRIOR ART

16
18
22
18
14'
14'a

16
18
22
30
26

FIG.5.